# EUROPEAN PATENT SPECIFICATION

(11) **EP 3 948 033 B1**
(45) Date of publication and mention of the grant of the patent: **09.10.2024**
(21) Application number: 20712018.9
(22) Date of filing: 14.02.2020
(51) Int. Cl.: F16K 3/24, F16K 7/20, F16K 11/07

(54) **DIVERTER VALVE FOR FLUIDS**
UMLENKVENTIL FÜR FLUIDE
VANNE DE DÉRIVATION POUR FLUIDES

(30) Priority: 29.03.2019 IT 201900004781
(43) Date of publication of application: 09.02.2022
(73) Proprietor: Bozzolan, Mauro, 39052 Caldaro Sulla Strada Del Vino (BZ) (IT)
(72) Inventor: Bozzolan, Mauro, 39052 Caldaro Sulla Strada Del Vino (BZ) (IT)
(74) Representative: Zoli, Filippo
(86) International application number: PCT/IB2020/051238
(87) International publication number: WO 2020/201844

(56) References cited:
- US-A- 1 781 224
- US-A- 2 735 439
- US-A- 3 171 438
- US-A- 3 426 799

## Description

### Field of the invention

The present invention generally concerns the sector of multi-way valves for fluids, and in particular, the valves of the piston type for the distribution of fluids.

### State of the art

The hydraulic and aeraulic circuits usually provide for the use of shut-off valves to manage the flow of a fluid. Such valves comprise at least two ports for the inflow and/or outflow of the fluid. For example, the water treatment systems are normally provided with multi-way valves to block the flow of water or to channel it towards a desired outlet of the system from time to time. Pneumatic valves comprising a substantially tubular valve body having two or more ports, preferably at least three, and a control element in the shape of a stem bearing at least one shutter movable so that to slide inside the body itself, are known in this sector. The shutter normally consists of a disc having two circular surfaces or anyhow complementary to the inner shape of the tube, each of which is combined with a gasket. Such shutter is moved by the pin so that to be displaced inside the tubular body between at least two positions, in each of which it is pushed against a respective abutment portion obtained inside the tube itself, so that to prevent the flow of fluid at least in one part of the tubular body, thanks to the seal that is formed between the gasket and the abutment portion. Thus, depending on the position of the shutter, it will be possible to isolate the inlet port from the outlet ports, or to fluidically connect at least one inlet port with at least one outlet port according to need. The stem is normally moved automatically by an actuator of the pneumatic type. Valves of such structure can also be used for aeraulic systems in which an aeriform fluid runs.

However, this configuration has some disadvantages. Firstly, the tubular body must have at least an abutment portion consisting of a narrowing of the inner circumference of at least one length of the tubular body itself. Such narrowing implies additional costs for the production of the tubular body, which ends up having lengths with different sections and thus an irregular inner surface, especially in the event of valves having various ports, such as 5-way valves, which are particularly used in various types of hydraulic systems to carry out, for example, the cleaning of filters for the water treatments. Moreover, each narrowing of the tubular body necessarily involves load losses, thus reducing the flow rate of the fluid.

In addition, the gaskets are combined with the surfaces of the shutter in a way such as not to be able to be detached and are thus difficult to replace when worn. Finally, the pneumatic actuation is complex and also has complexities during the installation step of the valve, due to the presence of additional components to allow its operation.

The documents US2735439, US1781224 and US317438 concern valves comprising a shutter having a fixed portion and a movable portion, in-between which a gasket is arranged and which is deformed by crushing when, following a movement of the shutter in a direction, the movable portion moves closer to the fixed portion. However, such solution is only applicable to valves of a different type with respect to those object of the present invention since, due to how they are structured, the compression can occur following the movement in only one direction and at only one point of the valve.

### Objects and Summary of the invention

Object of the present invention is to overcome the drawbacks of the known art, by providing a diverter valve having a body with a substantially uniform inner section, i.e. devoid of abutment elements inside it, to ensure the fluid seal between the shutter and the body itself, thus allowing to fluidically connect different ports of the same valve from time to time.

A further object is to provide a diverter valve that allows a constant flow rate of the fluid.

A further object is to propose a diverter valve having a particularly linear valve body and which can be produced by molding.

Yet a further object is to provide a diverter valve structured so that to facilitate the dismantling and maintenance steps.

Yet a further object is to propose a diverter valve that can be automatically operated, with a simplified actuation.

The present invention thus concerns a diverter valve for circuits inside which a liquid or aeriform fluid circulates according to claim 1 and a method for assembling said valve according to claim 13.

In particular, the valve comprises a pin bearing at least one shutter and slidingly mounted inside the valve body itself. The shutter is in turn slidingly mounted with respect to the pin and comprises an element deformable by crushing and susceptible to radial expansion, when at least one of the shutters is pressed against one or the other of the two fixed elements inside the valve body. When crushed and, thus, radially expanded, the deformable element comes into contact with a section of the inner surface of the valve body, thus creating a mechanical fluidic seal therewith, so that to channel the fluid in a desired portion of the valve from time to time.

Thus, advantageously, the use of a deformable element, in the form of a radially expandable gasket, allows to create a seal with the valve body without requiring any abutment element inside the valve body. In fact, the valve body does not have to have narrowings in the desired positions, since the gasket itself is expanded at the desired portions by mechanical compression caused by the respective fixed element against which it is pressed.

Preferably, each shutter comprises or is combined with two supporting elements, which are also slidingly combined with the pin and in-between which the deformable element is arranged and which, when they are moved closer to one another by the fixed element and by the thrust or traction exerted on the pin, favor the compression of the deformable element of each shutter, so that to ensure the proper seal.

Thus, each shutter can be moved between two different positions, in each of which the deformable element is deformed to stop the flow of fluid or to connect different ports of the valve, depending on the position taken. Thus, during the displacements of the pin, the deformable element is instead in a resting condition, in which its size becomes less than the inner size of the valve body so that to be able to slide inside it.

Thus, advantageously, the valve body is structurally very simple, since there are no narrowings inside it and is thus very simple to produce, for example by molding. In addition, and advantageously, it does not have any narrowing that can reduce the flow rate.

Advantageously, the pin has a first and a second abutment portion, each intended to come into contact with, or closer to, a respective supporting element of the respective shutter, so that to keep it in a predetermined position with respect to the pin itself. This way, following the movement of the pin in a direction, one of the two supporting elements abuts against the first or the second fixed element; the further movement of the pin in the same direction also causes the movement of the abutment portions and, thus, one of them starts to press against the respective supporting element, pushing it towards the other supporting element which is instead restrained by the fixed element, thus causing a deformation and, specifically, a radial expansion of the deformable element of the shutter.

Preferably, the pin has at least one intermediate part having a first cross-section sized to be inserted in a pass-through hole obtained in each shutter and two extensions on opposite sides of the intermediate part, each having at least one portion with a cross-section of greater size than that of the pass-through hole. Whenever there is more than one shutter, at least one spacing element, also having a greater section than that of said hole and intended to keep the shutters at a predetermined distance from one another, is preferably combined with the intermediate part of the pin. More preferably, at least one end part and even more preferably both the extensions of the pin are removably combined with the intermediate part, for example by screwing, to allow to easily and quickly combine each shutter with the pin. This facilitates both the initial assembling step and the subsequent steps, whenever parts of the shutter need to be replaced.

Preferably, both the deformable element and the supporting elements have an outer profile complementary to that of the valve body, but of slightly smaller size. Preferably, they have a circular profile and even more preferably the supporting elements are in the form of discs, while the deformable element can also be in the form of a disc, or can have an annular shape and can only be combined with a peripheral part of the supporting elements.

Advantageously, a first and a second end portion can be removably combined with the valve body, so that to be removed according to need to be able to carry out maintenance and/or cleaning operations of the valve. In turn, the first and the second fixed elements can be an integral part of the first and of the second end portions, or separate elements combined therewith in a fixed and removable way, otherwise or in addition they can also be combined with the extensions of the pin, so that, following the sliding of the pin in a first or a second direction opposite from one another, one of them alternately abuts and stops against one of the end portions of the valve, to restrain the respective supporting element and to cause the compression of the deformable element.

Preferably, automatic driving means of the electric type, which can be operated manually or automatically, are combined with the valve. Such means can comprise a driving actuator. The use of electric driving means further simplifies the structure of the valve, since it eliminates the need to provide it with or to connect it to a compressor, which is required in case of pneumatic valves.

### List of the figures

Further characteristics and advantages of the invention will be better highlighted by the review of the following detailed description of a preferred, but not exclusive, embodiment illustrated by way of example and without limitations, with the aid of the accompanying drawings, in which:
- figure 1 is a perspective view of an embodiment of a diverter valve according to the present invention;
- figures 2a, 2b and 2c each show a section of the valve of figure 1 in a resting condition and in two different working conditions;
- figures 3a, 3b and 3c show a partial section of some inner components of the valve of figure 1, respectively in the resting condition and in the two working conditions of figures 2a, 2b and 2c;
- figures 4a and 4b each show a section of an example not belonging to the invention, in two different working conditions;
- figures 5a, 5b and 5c each show a section of a further example not belonging to the invention, in a resting condition and in two different working conditions;
- figures 6a, 6b and 6c show a partial section of some inner components of the valve of figures 5a, 5b and 5c, respectively in the resting condition and in the two working conditions; and
- figures 7a, 7b and 7c show a section of some of the inner components of the valve shown in figure 3a.

### Detailed description of the invention

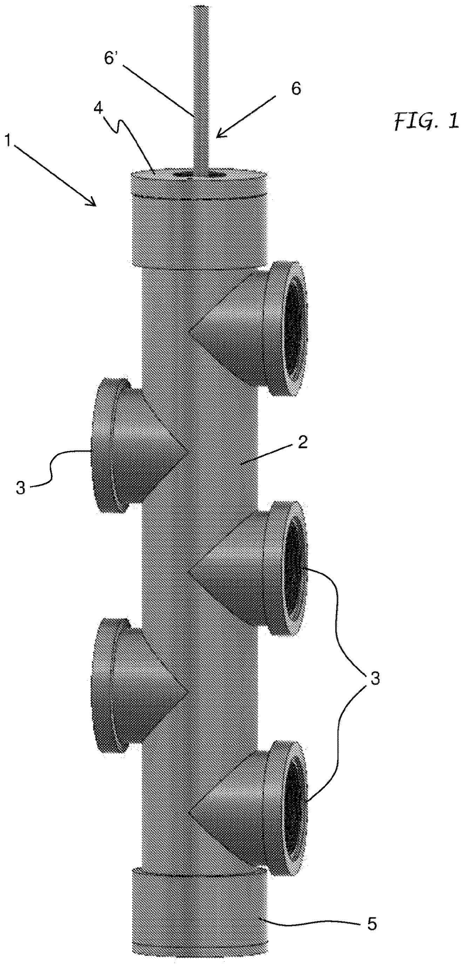

Figure 1 shows a diverter valve 1 according to the present invention, for hydraulic o aeraulic circuits, in which a fluid, which can be liquid or aeriform, circulates.

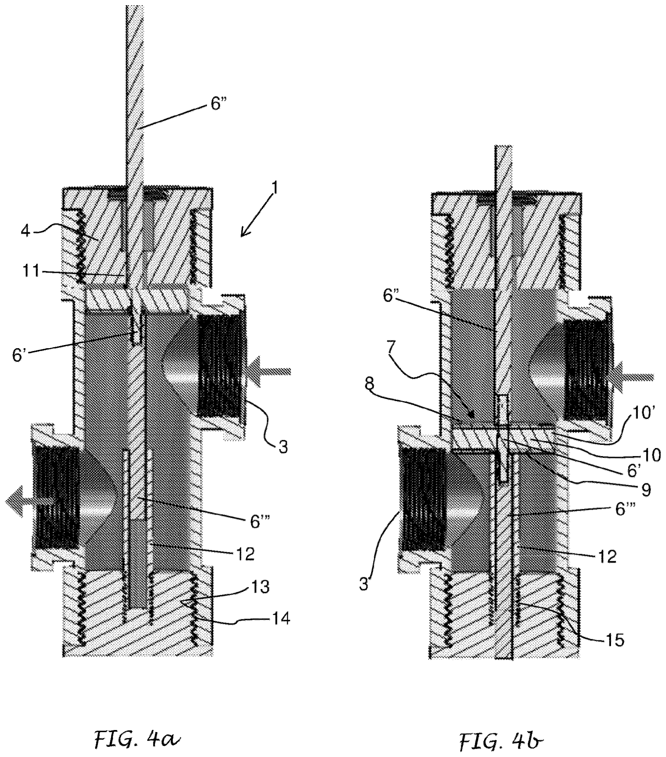

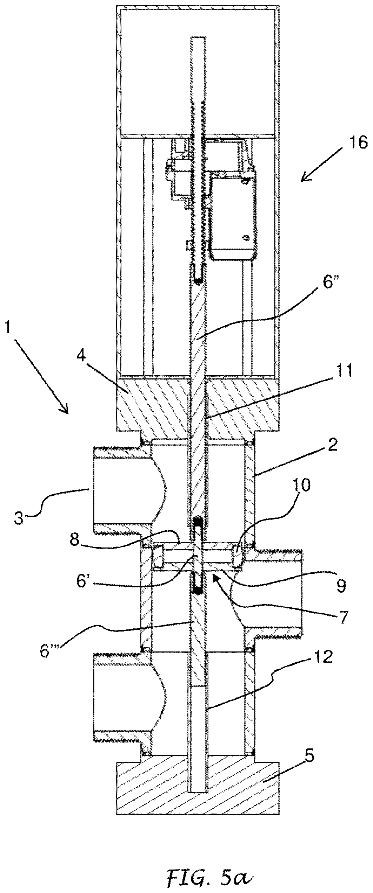

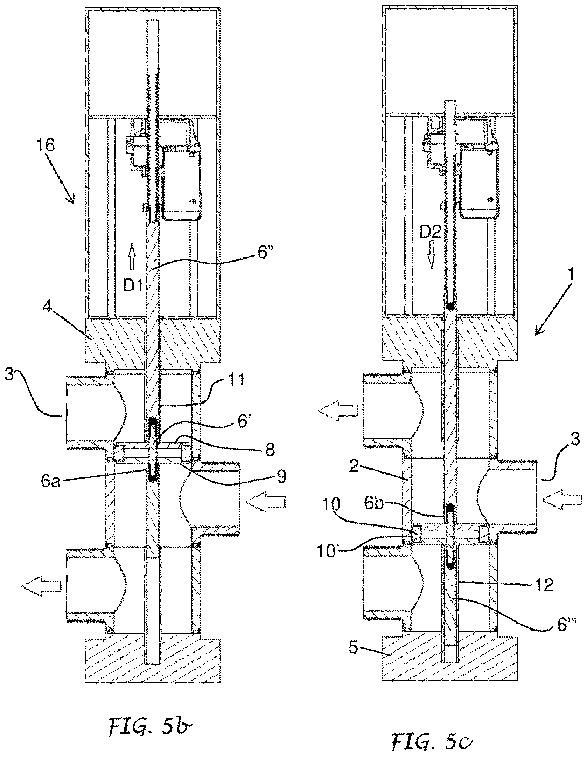

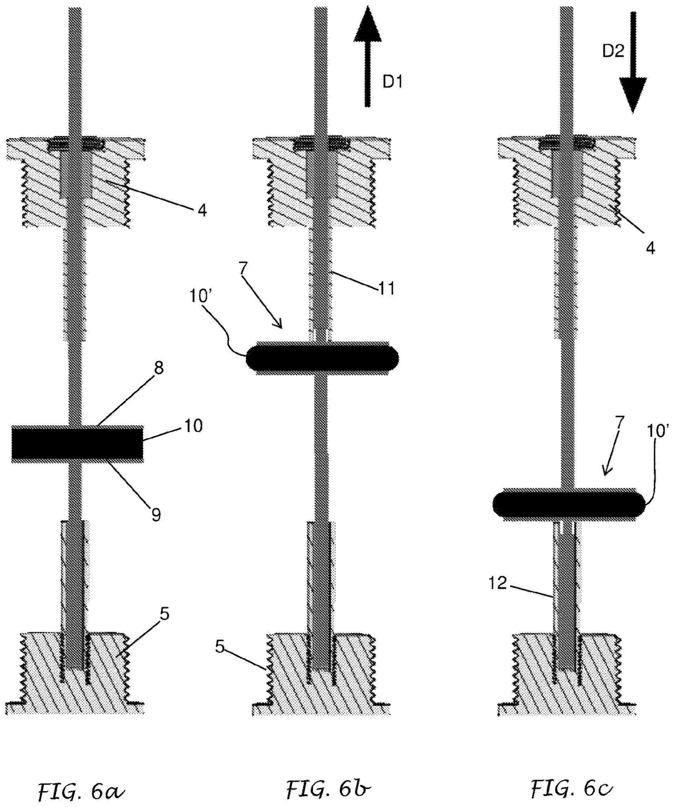

The valve comprises a hollow, preferably substantially tubular, valve body **2** having at least two ports **3** for the inflow and/or outflow of fluid into/from the valve. Preferably, the valve can be a 2-way valve, as shown in figures 4a and 4b, or a 3-way valve, as shown in figures 5a, 5b, 5c, 6a, 6b, and 6c, or a 5-way valve, as shown in figures 1, 2a, 2b, 2c, 3a, 3b and 3c. The body can be made of a plastic material, stainless steel, or any other material and extends between a first end portion **4** and a second end portion **5.**

The valve further comprises a pin **6** provided with one or more shutters **7.** The pin is combined with the valve body so that to slide inside it, alternately in a first direction **D1** and in a second direction **D2** opposite the first direction.

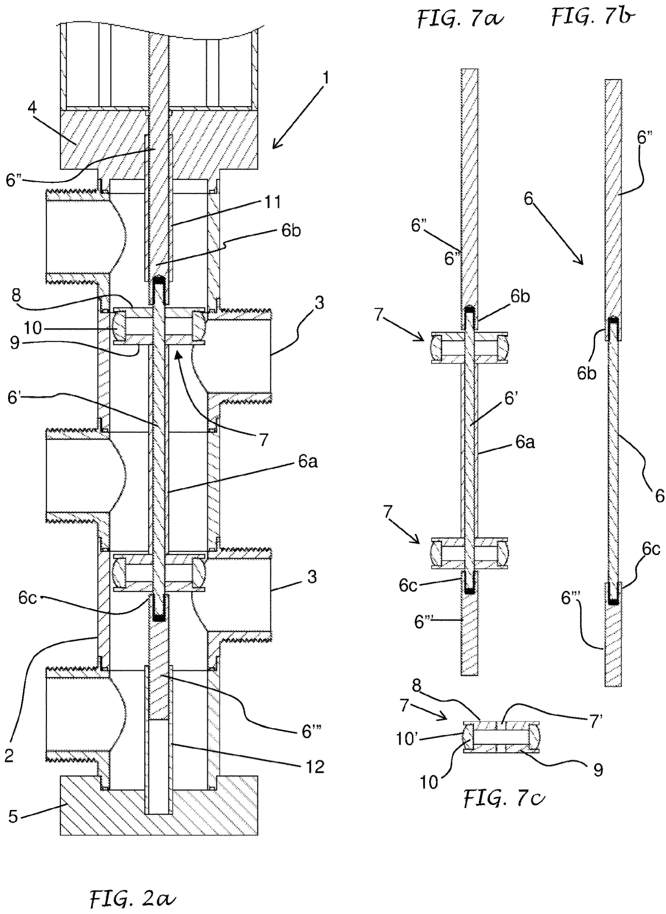

Each shutter has a shape complementary to the inner section of the body and is sized to be able to slide inside it. In case of a valve body with a circular section, each shutter is in the form of a disc having a diameter slightly smaller than that of the inner circumference of the tube, so that to be able to slide inside it, when in a resting position, as shown in figures 2a, 3a, 5a and 6a.

According to the invention, each shutter is combined with the pin so that to be able to slide with respect to it and can comprise or be combined with a first supporting element **8** and a second supporting element **9** between which a deformable element **10,** of the type able to radially expand when subjected to pressure, such as a gasket sealing by crushing, is arranged. The first and the second supporting elements are slidingly mounted on the pin so that to be movable one with respect to the other such as to be able to move closer or away from one another. In case of a shutter with a circular section, it comprises a circular gasket, preferably in the form of a disc, arranged between two supporting elements, also in the form of discs made of a rigid material. Advantageously, and as shown in figure 7a, each shutter **7** has a pass-through hole **7',** preferably in a central position thereof, in which the pin is inserted. Preferably, the deformable element is a small centrally-perforated disc or a ring made of silicone or synthetic rubber, such as rubber of the EPDM type.

The pin comprises an intermediate part **6'** having a first cross-section, sized to be able to be inserted in said pass-through hole **7',** and a first and second extension **6"** and **6‴,** each extending from a respective end of the intermediate part, as shown in particular in figure 7b.

Each shutter is combined with the intermediate part **6'** of the pin and is kept in a predefined position by a first abutment portion **6b** and a second abutment portion **6c** of the first and the second extension of the pin and by at least one possible spacing element **6a,** whenever there is more than one shutter, each to be combined with the intermediate part such as to be arranged between a respective couple of shutters, as shown in detail in figure 7a. At least the first and the second abutment elements, but preferably the entire first and the entire second extensions of the pin, have a second cross-section sized so that to not allow the insertion of the shutter in said pass-through hole **7'.** At least the ends, but preferably the entire spacing element, has a third cross-section also sized so that to not allow the insertion of the shutter in said pass-through hole 7'. Preferably, the second and the third cross-sections are equal.

Advantageously, the first and the second extension of the pin are separate elements, preferably removably combined with the intermediate part, for example by screwing.

A first fixed element **11** and a second fixed element **12** are respectively combined with the first and the second end portions **4, 5** of the tubular body. The two fixed elements are hollow so that to each accommodate a respective first or second extension of the pin and to allow it to slide inside it.

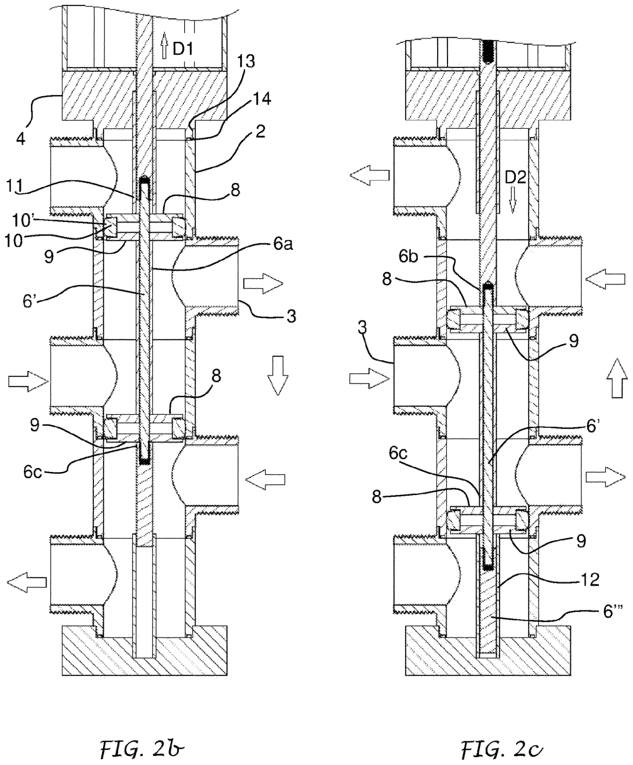

This way, when the pin is moved in the first direction **D1,** following the displacement, the first supporting element **8** comes into contact with the first fixed element **11** and the shutter is pressed against it. Since the pin can slide with respect to the shutter, a further displacement thereof in the direction **D1** also causes a displacement of the second end extension and, with it, of the second abutment portion, which is pressed against the second supporting element **9** of the shutter, so that to move it closer to the first supporting element **8,** thus causing the compression and the consequent radial expansion of the deformable element, which emerges with respect to the surfaces of the supporting elements, as shown in figures 2b, 3b, 5b and 6b, thus pressing on the inner surface of the valve body to ensure a mechanical seal against the hydraulic force of the fluid and to force it to follow the desired direction, as shown in figures 2b and 5b.

Vice-versa, when the pin is moved in the direction **D2,** following the displacement, the second supporting element **9** comes into contact with the second fixed element **12** and the shutter is pressed against it. Since the pin can slide with respect to the shutter, a further displacement thereof in the direction **D2** also causes a displacement of the first extension and, with it, of the first abutment portion, which is pressed against the first supporting element **8** of the shutter, thus moving it closer to the second abutment element and causing the radial expansion of the deformable element, which emerges at least partially with respect to the surfaces of the supporting elements, as shown in figures 2c, 3c, 5c and 6c, and presses on the inner surface of the valve body to ensure a mechanical seal against the hydraulic force of the fluid to force it to follow the desired direction, as shown in figures 2c and 5c.

In case of the 2-way valve which is shown in figures 4a and 4b, when the pin is moved in a direction, following the displacement, the first supporting element **8** comes into contact with the first fixed element, or anyhow with the first end portion **4** of the valve body, so that to fluidically connect the two ports of the valve to one another and to allow the fluid to run inside the valve, as shown in figure 4a; vice-versa, when the pin is moved in the opposite direction, following the displacement, the second supporting element **9** comes into contact with the second fixed element **12** and, thanks to the thrust exerted by the first abutment portion **6b,** the first supporting element **8** is moved closer to the second supporting and compresses the deformable element **10,** which emerges with respect to the surfaces of the outer portions and presses on the inner surface of the valve body so that to ensure a mechanical seal against the thrust of the fluid, so that to isolate the two ports from one another and to prevent the passing of the fluid in the valve, as shown in figure 4b.

Advantageously, the first and the second end portions of the valve are elements separate from the valve body and are removably combined therewith, for example by screwing. For this, each end portion has first hooking means **13,** such as a thread, and the valve body has corresponding second hooking means **14,** such as a thread, intended to couple with the first hooking means. The first and the second fixed elements can be an integral part of the respective first and second end portions, or separate elements combined therewith in a fixed but preferably removable way, by means of respective hooks **15** so that to be able to combine fixed elements of different sizes depending on the type and size of the valve itself.

This configuration allows to have a valve body with an almost continuous inner surface except for the openings corresponding to the ports and this advantageously allows to obtain the valve body by molding.

A driving actuator **16** is combined with the valve - shown in figures 5a, 5b and 5c. The actuator can be operated manually, for example by means of a switch, or automatically, for example by means of a pressure switch. Preferably and thanks to its configuration, the valve can be combined with an actuator of the electric type, thus significantly simplifying it with respect to the known valves, which must be driven by pneumatic actuators. The driving actuator is combined with the pin **6** and, specifically, with the first or the second extension **6", 6‴** to cause its movement in the direction **D1** or in the direction **D2** as needed. The particular structure of the valve allows the use of an electric actuator, with respect to the valves of the known art which require a pneumatic actuator, since the deformable element also acts as a damper to compensate possible imprecisions of the actuator during the travel of the piston. Thanks to the particular configuration of the valve, it is possible to cause the expansion of the deformable element in two different directions and positions of the actuator with respect to the valve body by using a single actuator, both when the shutter is pulled against the first fixed element and when it is pushed against the second fixed element; in addition, it is also possible to cause the almost instantaneous expansion of each of the deformable elements of at least two shutters in different positions, so that to be able to also drive, always with a single actuator, a 5-way valve.

In specific, figures 1, 2a, 2b and 2c show a 5-way valve, thus provided with five ports **3** that can alternatively be inlet or outlet ports of the fluid, depending on the type and method of use of the valve itself in the circuit with which it is combined. As shown, the 5-way valve comprises two shutters **7** borne by the same pin **6** and movable in the valve body so that to fluidically connect different couples of ports of the valve, as needed, so that to vary the flows of the fluid. In specific, by moving the shutters, it is possible to deviate the fluid coming in through an inlet port alternatively towards two different outlet ports, as denoted by the arrows of figures 2b and 2c, by moving the shutters kept in a resting condition shown in figure 2a, in which the deformable element of each shutter is not expanded and thus stays detached from the inner wall of the valve body, such as not to generate frictions, which would hinder the movement of the shutters and which would cause undesired wearing of the deformable elements.

In particular, such a type of valve is widely used in the hydraulic systems in which it is necessary to carry out cleaning operations of the water treatment filters. In specific, a first working condition of the valve for the recirculation of the liquid from and to the tank containing the liquid, such as a pool or the like, is shown in figure 2b. In such condition, the water coming out of the tank is channeled through a filter and then sent back in the tank. Figure 2c shows the valve in a second working condition, in which the displacement of the shutters determines a variation of the flow of the fluid. In such condition it is possible, for example, to carry out the counter-washing of the filter, by forcing the water to cross the filter in the direction opposite the filtering one, so that to allow the removal of the particles captured previously; the water is then channeled towards an outlet different from the previous one to be released, without entering the tank.

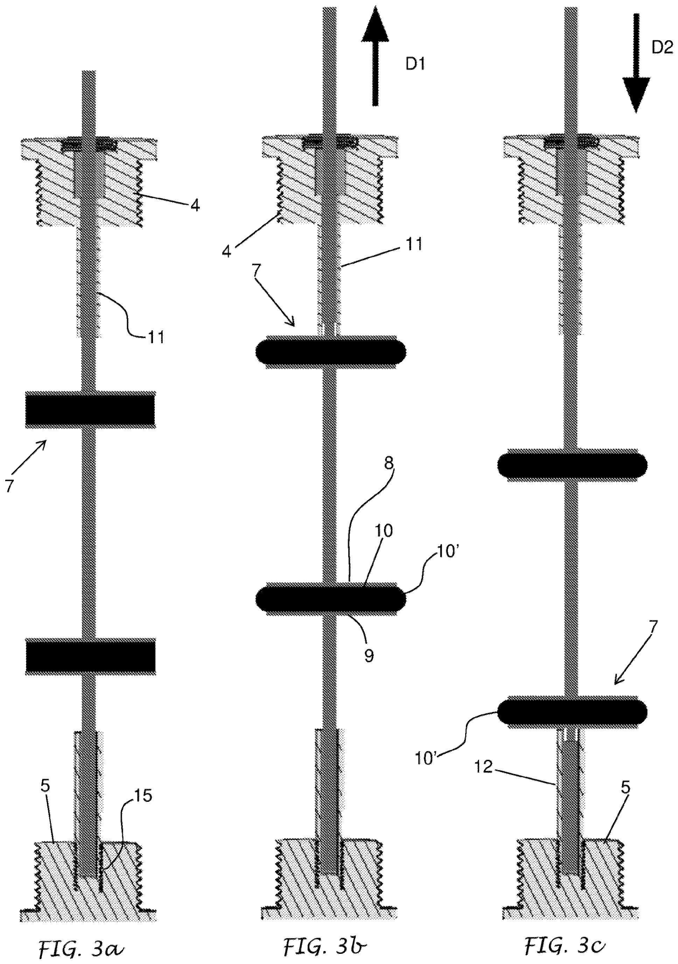

Correspondingly, the shutters in the resting condition corresponding to the movement steps are shown in figure 3a, while figures 3b and 3c show the shutters when they are in the working positions of figures 2b and 2c. As shown in figures 2a and 3a, the deformable elements **10** of both the shutters are in a resting condition, in which they stay inside the first and the second supporting elements, thus allowing the shutter itself to slide in the valve body. Vice-versa, when in the working conditions shown in figures 2b, 2c, 3b and 3c, the displacement of the shutters, together with the first or the second fixed element **11, 12,** causes the first and the second supporting elements **8, 9** of each shutter to move closer to one another and the consequent crushing of the respective deformable element **10,** so that at least its peripheral portion **10'** emerges from the respective first and second supporting elements, thus coming into contact and establishing a fluid seal with the inner surface of the valve body.

Instead, figures 4a and 4b show a two-way valve. In this case, a single shutter, movable between a first position shown in figure 4a, in which it establishes a fluidic connection between the two ports, and a second position shown in figure 4b, in which the shutter is pushed against the second fixed element **12** to cause the compression of the deformable element and to thus isolate the inlet port from the outlet one, is combined with the pin.

Finally, figures 5a, 5b, 5c, 6a, 6b and 6c show a 3-way valve. Also in this case, there is a single shutter for fluidically connecting an inlet with a different outlet from time to time. In specific, when the shutter **7** is pulled or pushed against the first fixed element **11,** the peripheral portion **10'** of the deformable portion emerges from the supporting elements **8, 9** and defines a fluid seal with the valve body to isolate a port with respect to the other two, as shown in figures 5b and 6b, while when the shutter **7** is moved in the opposite direction, so that to be pressed against the second fixed element **12,** the deformable element **10** defines a fluid seal in a different position, thus allowing the passing of the fluid between two different ports and preventing the passing in the third, as shown by the arrows of figure 5b.

For assembling the valve, it is sufficient to prearrange a valve body having two or more ports; to combine the first or the second end portion, with which the respective first or second fixed element has in turn to be combined, with the valve body; to arrange the pin provided with the first or the second abutment portion inside the valve body, with the pin slidingly mounted inside the valve body; to slidingly combine at least one shutter provided with a deformable element, with the pin; to combine the second or the first abutment portion with the pin; to combine the second or the first fixed element with the respective second or first end portion; to combine the second or the first end portion with the valve body; and to combine the driving actuator with the pin for its movement.

Whenever the valve comprises at least two shutters, the step of interposing a respective spacing element between each couple of shutters is necessary, so that to keep the shutters at a predetermined distance, depending on the distance and the arrangement of the ports of the valve.

Advantageously, the maintenance operations are also simplified; in fact, to replace the deformable element, it is sufficient to separate the first or the second end element from the valve body, to slip off the pin with the respective shutters and to move the supporting elements away from each other in order to remove the deformable element and to replace it.

Reference was made to the 2-, 3- and 5-way valves, in specific configurations, in the description since they are the most widely used ones, but this does not exclude the fact that the same concept can be applied to valves with a different number of ports and with different types of use.

## Claims

1. A diverter valve (1) for fluid circulation circuits, comprising a valve body (2) having two or more ports (3) for the fluid inflow and/or outflow, a pin (6) slidingly mounted inside said body and one or more shutters (7) each combined with said pin and comprising a deformable element (10), wherein a first and a second fixed element (11, 12) are combined with a first and a second end portion (4, 5) of the valve body, in that each of said one or more shutters is combined with said pin so that to be able to slide with respect to it and in that said first fixed element (11) interacts with one of said one or more shutters, causing the compression of the deformable element (10) of each of said one or more shutters, following the sliding of the pin in a first direction (Dl), making it expand radially such as to define a fluid seal with the valve body in a first position, and following the sliding of the pin in a second direction (D2), opposite said first direction, said second fixed element (12) interacts with one of said one or more shutters, causing the compression of the deformable element (10) of each of said one or more shutters, making it expand radially such as to define a fluid seal with the valve body in a second position,
**characterized in that** at least two shutters are combined with the pin and wherein each shutter is kept in a predefined position by first and second abutment portions of the pin (6b, 6c) and by at least one spacing element (6a) arranged between two adjacent shutters, to be combined with the intermediate part of the pin, so that to be arranged between a respective couple of shutters and sized so that not to be able to be inserted in a pass through hole (7') of the shutter.

2. Valve according to claim 1, wherein said first and second fixed elements (11, 12) are at least partially hollow for slidingly accommodating a respective portion of the pin, wherein each of said one or more shutters comprises a first and a second supporting element (8, 9) movable with respect to one another, wherein the deformable element (10) is arranged between said first and said second supporting elements and wherein,
following the sliding of the pin in the first direction (Dl), the first supporting element (8) of one of said one or more shutters is pressed against the first fixing element (11) and the second supporting element (9) of each of said one or more shutters is moved closer to the first supporting element (8) of the respective shutter, thus causing the compression of the deformable element (10), such as to make at least one peripheral portion (10') emerge therefrom with respect to said first and second supporting elements, such as to define a fluid seal with the valve body; and,
following the sliding of the pin in the second direction (D2), the second supporting element (9) of one of said one or more shutters is pressed against the second fixed element (12) and the first supporting element (8) of each of said one or more shutters is moved closer to the second supporting element (9) of the respective shutter, thus causing the compression of the deformable element (10), such as to make at least one peripheral portion (10') emerge therefrom with respect to said first and second supporting elements, such as to define a fluid seal with the valve body.

3. Valve according to claim 1 or 2, wherein each shutter comprises said pass-through hole (7') for the insertion and sliding of the pin,
wherein each shutter is kept in a predefined position by means of the first abutment portion (6b) and the second abutment portion (6c) of the pin,
wherein the first and the second abutment portions are sized so that not to be able to be inserted in said pass through hole (7') of the shutter and
wherein, following the sliding of the pin in the first direction (Dl), the first supporting element (8) of one of said one or more shutters is pressed against the first fixed element (11), the first abutment portion (6b) pushes the second supporting element (9) of each of said one or more shutters towards the first supporting element (8) of the respective shutter, moving closer thereto and causing the compression of the deformable element (10); and, following the sliding of the pin in the second direction (D2), the second supporting element (9) of one of said one or more shutters is pressed against the second fixed element (12) and the second abutment portion (6c) pushes the first supporting element (8) of each of said one or more shutters towards the second supporting element (8) of the respective shutter, moving it closer thereto and causing the compression of the deformable element (10) .

4. Valve according to claim 3, wherein the pin comprises an intermediate part (6') to be inserted at least partially in the pass-through hole (7') and a first and a second extension (6", 6‴) extending from opposite parts of the intermediate part, each comprising a respective portion of said first or second abutment portion (6b, 6c) and each being sized to be able to slide inside the respective first or second fixed element (11, 12) .

5. Valve according to claim 4, wherein the first and the second extensions (6" and 6‴) are separate elements removably combined with the intermediate part, preferably by screwing.

6. Valve according to any one of the preceding claims, wherein each shutter and the possible first and second supporting elements have an outer profile complementary to the inner section of the valve body and are sized such as to be able to slide inside it when the deformable element is in a resting condition in which it is not compressed.

7. Valve according to any one of the preceding claims, comprising a circular-section valve body and wherein the shutter has circular section with an outer diameter smaller than the inner diameter of the valve body, when the deformable element is in the resting condition.

8. Valve according to any one of the preceding claims, wherein the deformable element is made of a synthetic polymer, such as silicone, or a synthetic rubber, such as a rubber of EPDM type and the like.

9. Valve according to any one of the preceding claims, wherein the first and second end portions are removably combined with the valve body, preferably by screwing by means of respective first coupling means (13) which are matched to corresponding second coupling means (14) obtained at the level of the valve body, the first and second fixed elements being able to be an integral part of the respective first and second end portions, or separate elements combined therewith in a fixed or removable way.

10. Valve according to any one of the preceding claims, wherein the valve body has an almost continuous inner surface, except for the openings corresponding to the ports, and does not have peripheral abutment elements emerging from its inner surface.

11. Valve according to any one of the preceding claims, comprising a manually or automatically controlled driving actuator (16) to move the pin alternately in the first and the second directions (Dl, D2) and wherein said driving actuator is an actuator of the electric type.

12. Valve according to any one of the preceding claims, wherein the valve:
- has five ports, and two shutters are combined with the pin to divert the fluid flow between an inlet port and two different outlet ports, thus reversing the crossing direction of two intermediate ports.

13. Method for assembling a valve according to any one of the preceding claims, wherein there is provided the steps of
a) prearranging the valve body (2) having two or more ports (3) for the inflow and/or outflow of the fluid;
b) combining the first or the second end portion (4, 5) with the valve body;
c) combining, respectively, the first or the second fixed element (11, 12) with said first or second end portion;
d) arranging the pin (6) inside the valve body so that it can slide within said body, said pin being provided with a first or a second abutment portion (6b, 6c);
e) slidingly combining at least one shutter (7) comprising a deformable element (10) with said pin;
f) combining the second or the first abutment portion (6c, 6b) with said pin;
g) combining, respectively, the second or the first fixed element (12, 11) with the second or first end portion;
h) combining said first or second end portion (5, 4) with the valve body; and
i) combining a driving actuator with the pin for moving it in opposite directions within the valve body,
**characterized in that** the valve comprises at least two shutters and the step e) provides to interpose a spacing element (6a) between each couple of shutters, so that to keep each couple of adjacent shutters at a predefined distance from one another.

## Patentansprüche

1. Umschaltventil (1) für Fluidzirkulationskreise, umfassend einen Ventilkörper (2) mit zwei oder mehr Öffnungen (3) für den Fluidzufluss und/oder -abfluss, einen im Inneren des Körpers gleitend angebrachten Stift (6) und einen oder mehrere Schieber (7), die jeweils mit dem Stift kombiniert sind und ein verformbares Element (10) umfassen, wobei ein erstes und ein zweites feststehendes Element (11, 12) mit einem ersten und einem zweiten Endabschnitt (4, 5) des Ventilkörpers kombiniert sind, dass jeder der einen oder mehreren Schieber mit dem Stift kombiniert ist, so dass er in der Lage ist, in Bezug auf diesen zu gleiten, und dass das erste feststehende Element (11) mit einem der einen oder mehreren Schieber zusammenwirkt, wodurch das Zusammendrücken des verformbaren Elements (10) jedes der einen oder mehreren Schieber bewirkt wird, nach dem Gleiten des Stifts in eine erste Richtung (D1), wodurch es sich radial ausdehnt, so dass es in einer ersten Position eine Fluiddichtung mit dem Ventilkörper bildet, und nach dem Gleiten des Stifts in eine zweite Richtung (D2), entgegengesetzt zu der ersten Richtung, das zweite feststehende Element (12) mit einem der einen oder mehreren Schieber zusammenwirkt, wodurch das Zusammendrücken des verformbaren Elements (10) jedes der einen oder mehreren Schieber bewirkt wird, wodurch es sich radial ausdehnt, so dass es in einer zweiten Position eine Fluiddichtung mit dem Ventilkörper bildet,
**dadurch gekennzeichnet, dass** mindestens zwei Schieber mit dem Stift kombiniert sind und wobei jeder Schieber durch erste und zweite Anschlagabschnitte (6b, 6c) des Stifts und durch mindestens ein Abstandselement (6a) in einer vordefinierten Position gehalten ist, das zwischen zwei benachbarten Schiebern angeordnet ist, um mit dem Zwischenteil des Stifts kombiniert zu werden, so dass es zwischen einem jeweiligen Paar von Schiebern angeordnet und so bemessen ist, dass es nicht in ein Durchgangsloch (7') des Schiebers eingeführt werden kann.

2. Ventil nach Anspruch 1, wobei das erste und das zweite feste Element (11, 12) zumindest teilweise hohl sind, um gleitend einen jeweiligen Abschnitt des Stifts aufzunehmen, wobei jeder der einen oder mehreren Schieber ein erstes und ein zweites Stützelement (8, 9) umfasst, die in Bezug zueinander beweglich sind, wobei das verformbare Element (10) zwischen dem ersten und dem zweiten Stützelement angeordnet ist und wobei,
nach dem Gleiten des Stifts in die erste Richtung (D1) das erste Stützelement (8) eines der einen oder mehreren Schieber gegen das erste feststehende Element (11) gedrückt wird und das zweite Stützelement (9) jedes der einen oder mehreren Schieber näher an das erste Stützelement (8) des jeweiligen Schiebers bewegt wird, wodurch das Zusammendrücken des verformbaren Elements (10) bewirkt wird, so dass mindestens ein Umfangsabschnitt (10') in Bezug auf das erste und zweite Stützelement aus diesem herausragt, so dass eine Fluiddichtung mit dem Ventilkörper gebildet wird und,
nach dem Gleiten des Stifts in der zweiten Richtung (D2) das zweite Stützelement (9) eines der einen oder mehreren Schieber gegen das zweite feststehende Element (12) gedrückt wird und das erste Stützelement (8) jedes der einen oder mehreren Schieber näher an das zweite Stützelement (9) des jeweiligen Schiebers bewegt wird, wodurch das Zusammendrücken des verformbaren Elements (10) bewirkt wird, so dass mindestens ein Umfangsabschnitt (10') in Bezug auf das erste und zweite Stützelement aus diesem hervorragt, so dass eine Fluiddichtung mit dem Ventilkörper gebildet wird

3. Ventil nach Anspruch 1 oder 2, wobei jeder Schieber das Durchgangsloch (7') für das Einführen und Gleiten des Stifts umfasst,
wobei jeder Schieber mittels des ersten Anschlagabschnitts (6b) und des zweiten Anschlagabschnitts (6c) des Stifts in einer vordefinierten Position gehalten ist,
wobei die ersten und zweiten Anschlagabschnitte so bemessen sind, dass sie nicht in das Durchgangsloch (7') des Schiebers eingeführt werden können, und
wobei nach dem Gleiten des Stifts in die erste Richtung (D1) das erste Stützelement (8) eines der einen oder mehreren Schieber gegen das erste feste Element (11) gedrückt wird, der erste Anschlagabschnitt (6b) das zweite Stützelement (9) jedes der einen oder mehreren Schieber in Richtung des ersten Stützelements (8) des jeweiligen Schiebers drückt, sich diesem annähert und das Zusammendrücken des verformbaren Elements (10) bewirkt; und nach dem Gleiten des Stifts in die zweite Richtung (D2) das zweite Stützelement (9) eines der einen oder mehreren Schieber gegen das zweite feste Element (12) gedrückt wird, und der zweite Anschlagabschnitt (6c) das erste Stützelement (8) jedes der einen oder mehreren Schieber in Richtung des zweiten Stützelements (8) des jeweiligen Schiebers drückt, wodurch es sich diesem nähert und das Zusammendrücken des verformbaren Elements (10) bewirkt.

4. Ventil nach Anspruch 3, wobei der Stift ein Zwischenteil (6'), das zumindest teilweise in das Durchgangsloch (7') einzuführen ist, und ein erstes und ein zweites Verlängerungsstück (6", 6‴) umfasst, die sich von gegenüberliegenden Teilen des Zwischenteils aus erstrecken und jeweils einen entsprechenden Abschnitt des ersten oder zweiten Anschlagabschnitts (6b, 6c) umfassen und jeweils so bemessen sind, dass sie in der Lage sind, in dem entsprechenden ersten oder zweiten feststehenden Element (11, 12) zu gleiten.

5. Ventil nach Anspruch 4, wobei das erste und zweite Verlängerungsstück (6" und 6‴) separate Elemente sind, die mit dem Zwischenteil lösbar verbunden sind, vorzugsweise durch Verschraubung.

6. Ventil nach einem der vorhergehenden Ansprüche, wobei jeder Schieber und die möglichen ersten und zweiten Stützelemente ein Außenprofil aufweisen, das komplementär zu dem Innenquerschnitt des Ventilkörpers ist, und so bemessen sind, dass sie in der Lage sind, in diesem zu gleiten, wenn sich das verformbare Element in einem Ruhezustand befindet, in dem es nicht zusammengedrückt ist.

7. Ventil nach einem der vorhergehenden Ansprüche, das einen Ventilkörper mit kreisförmigem Querschnitt aufweist und wobei der Schieber einen kreisförmigen Querschnitt mit einem Außendurchmesser aufweist, der kleiner ist als der Innendurchmesser des Ventilkörpers, wenn sich das verformbare Element in dem Ruhezustand befindet.

8. Ventil nach einem der vorhergehenden Ansprüche, wobei das verformbare Element aus einem synthetischen Polymer, wie Silikon, oder aus einem synthetischen Kautschuk, wie einem Kautschuk des EPDM-Typs und dergleichen, hergestellt ist.

9. Ventil nach einem der vorhergehenden Ansprüche, wobei der erste und der zweite Endabschnitt lösbar mit dem Ventilkörper verbunden sind, vorzugsweise durch Verschraubung mittels entsprechender erster Koppelmittel (13), die an entsprechende zweite Koppelmittel (14) angepasst sind, die auf der Höhe des Ventilkörpers vorgesehen sind, wobei das erste und das zweite feststehende Element in der Lage sind, ein integraler Bestandteil des jeweiligen ersten und zweiten Endabschnitts oder separate Elemente zu sein, die fest oder lösbar damit verbunden sind.

10. Ventil nach einem der vorhergehenden Ansprüche, wobei der Ventilkörper mit Ausnahme der den Anschlüssen entsprechenden Öffnungen eine nahezu kontinuierliche Innenfläche aufweist und keine aus seiner Innenfläche herausragenden peripheren Anschlagelemente besitzt

11. Ventil nach einem der vorhergehenden Ansprüche, das einen manuell oder automatisch gesteuerten Antriebsaktuator (16) umfasst, um den Stift abwechselnd in die erste und die zweite Richtung (D1, D2) zu bewegen, und wobei der Antriebsaktuator ein elektrischer Aktuator ist.

12. Ventil nach einem der vorhergehenden Ansprüche, wobei das Ventil:
- fünf Anschlüsse aufweist und zwei Schieber mit dem Stift kombiniert sind, um den Fluidstrom zwischen einem Einlassanschluss und zwei verschiedenen Auslassanschlüssen umzulenken, wodurch die Durchflussrichtung von zwei dazwischenliegenden Anschlüssen umgekehrt wird.

13. Verfahren zum Zusammenbau eines Ventils nach einem der vorhergehenden Ansprüche, wobei die folgenden Schritte vorgesehen sind
a) Anordnen des Ventilkörpers (2) mit zwei oder mehr Anschlüssen (3) für den Zufluss und/oder den Abfluss des Fluids;
b) Verbinden des ersten oder des zweiten Endabschnitts (4, 5) mit dem Ventilkörper;
c) Verbinden des ersten bzw. zweiten feststehenden Elements (11, 12) mit dem ersten oder zweiten Endabschnitt;
d) Anordnen des Stifts (6) im Inneren des Ventilkörpers, so dass er innerhalb des Körpers gleiten kann, wobei der Stift mit einem ersten oder einem zweiten Anschlagabschnitt (6b, 6c) versehen ist,
e) gleitendes Verbinden mindestens eines Schiebers (7), der ein verformbares Element (10) umfasst, mit dem Stift;
f) Verbinden des zweiten oder des ersten Anschlagabschnitts (6c, 6b) mit dem Stift;
g) Verbinden des zweiten bzw. des ersten feststehenden Elements (12, 11) mit dem zweiten bzw. ersten Endabschnitt;
h) Verbinden des ersten oder zweiten Endabschnitts (5, 4) mit dem Ventilkörper; und
i) Verbinden eines Antriebsaktuators mit dem Stift, um diesen in entgegengesetzten Richtungen innerhalb des Ventilkörpers zu bewegen,
**dadurch gekennzeichnet, dass** das Ventil mindestens zwei Schieber umfasst und der Schritt e) vorsieht, ein Abstandselement (6a) zwischen jedem Paar von Schiebern anzuordnen, so dass jedes Paar von benachbarten Schiebern in einem vordefinierten Abstand zueinander gehalten wird.

## Revendications

1. - Vanne de dérivation (1) pour circuits de circulation de fluide, comprenant un corps de vanne (2) ayant deux orifices (3) ou plus pour l'entrée et/ou la sortie de fluide, une broche (6) montée de manière coulissante à l'intérieur dudit corps, et un ou plusieurs obturateurs (7) combinés chacun avec ladite broche et comprenant un élément déformable (10), des premier et second éléments fixes (11, 12) étant combinés avec des première et seconde parties d'extrémité (4, 5) du corps de vanne, chacun dudit ou desdits obturateurs étant combiné avec ladite broche de façon à être apte à coulisser par rapport à celle-ci et ledit premier élément fixe (11) interagissant avec l'un dudit ou desdits obturateurs, provoquant la compression de l'élément déformable (10) de chacun dudit ou desdits obturateurs, suite au coulissement de la broche dans une première direction (D1), l'amenant à s'étendre radialement de façon à définir une étanchéité aux fluides avec le corps de vanne dans une première position et, suite au coulissement de la broche dans une seconde direction (D2), opposée à ladite première direction, ledit second élément fixe (12) interagissant avec l'un dudit ou desdits obturateurs, provoquant la compression de l'élément déformable (10) de chacun dudit ou desdits obturateurs, l'amenant à s'étendre radialement de façon à définir une étanchéité aux fluides avec le corps de vanne dans une seconde position,
**caractérisée par le fait qu'**au moins deux obturateurs sont combinés avec la broche et chaque obturateur est maintenu dans une position prédéfinie par des première et seconde parties de butée de la broche (6b, 6c) et par au moins un élément d'espacement (6a) disposé entre deux obturateurs adjacents, à combiner avec la partie intermédiaire de la broche, de façon à être disposé entre un couple respectif d'obturateurs et dimensionné de façon à ne pas être apte à être introduit dans un trou traversant (7') de l'obturateur.

2. - Vanne selon la revendication 1, dans laquelle lesdits premier et second éléments fixes (11, 12) sont au moins en partie creux pour recevoir de manière coulissante une partie respective de la broche, chacun dudit ou desdits obturateurs comprenant des premier et second éléments de support (8, 9) mobiles l'un par rapport à l'autre, l'élément déformable (10) étant disposé entre lesdits premier et second éléments de support, et dans laquelle
suite au coulissement de la broche dans la première direction (D1), le premier élément de support (8) de l'un dudit ou desdits obturateurs est pressé contre le premier élément de fixation (11) et le second élément de support (9) de chacun dudit ou desdits obturateurs est rapproché du premier élément de support (8) de l'obturateur respectif, provoquant ainsi la compression de l'élément déformable (10), de façon à en faire émerger au moins une partie périphérique (10') par rapport auxdits premier et second éléments de support, de façon à définir une étanchéité aux fluides avec le corps de vanne ; et
suite au coulissement de la broche dans la seconde direction (D2), le second élément de support (9) de l'un dudit ou desdits obturateurs est pressé contre le second élément fixe (12) et le premier élément de support (8) de chacun dudit ou desdits obturateurs est rapproché du second élément de support (9) de l'obturateur respectif, provoquant ainsi la compression de l'élément déformable (10), de façon à en faire émerger au moins une partie périphérique (10') par rapport auxdits premier et second éléments de support, de façon à définir une étanchéité aux fluides avec le corps de vanne.

3. - Vanne selon la revendication 1 ou 2, dans laquelle chaque obturateur comprend ledit trou traversant (7') pour l'introduction et le coulissement de la broche,
chaque obturateur étant maintenu dans une position prédéfinie au moyen de la première partie de butée (6b) et de la seconde partie de butée (6c) de la broche,
les première et seconde parties de butée étant dimensionnées de façon à ne pas être aptes à être introduites dans ledit trou traversant (7') de l'obturateur, et
dans laquelle, suite au coulissement de la broche dans la première direction (D1), le premier élément de support (8) de l'un dudit ou desdits obturateurs est pressé contre le premier élément fixe (11), la première partie de butée (6b) pousse le second élément de support (9) de chacun dudit ou desdits obturateurs vers le premier élément de support (8) de l'obturateur respectif, se rapprochant de celui-ci et provoquant la compression de l'élément déformable (10) ; et, suite au coulissement de la broche dans la seconde direction (D2), le second élément de support (9) de l'un dudit ou desdits obturateurs est pressé contre le second élément fixe (12) et la seconde partie de butée (6c) pousse le premier élément de support (8) de chacun dudit ou desdits obturateurs vers le second élément de support (8) de l'obturateur respectif, le rapprochant de celui-ci et provoquant la compression de l'élément déformable (10).

4. - Vanne selon la revendication 3, dans laquelle la broche comprend une partie intermédiaire (6') à introduite au moins partiellement dans le trou traversant (7') et des première et seconde extensions (6", 6‴) s'étendant à partir de parties opposées de la partie intermédiaire, comprenant chacune une partie respective de ladite première ou seconde partie de butée (6b, 6c) et étant chacune dimensionnée pour être apte à coulisser à l'intérieur du premier ou second élément fixe (11, 12) respectif.

5. - Vanne selon la revendication 4, dans laquelle les première et seconde extensions (6" et 6‴) sont des éléments séparés combinés de manière amovible avec la partie intermédiaire, de préférence par vissage.

6. - Vanne selon l'une quelconque des revendications précédentes, dans laquelle chaque obturateur et les éventuels premier et second éléments de support ont un profil extérieur complémentaire de la section intérieure du corps de vanne et sont dimensionnés de façon à être apte à coulisser à l'intérieur de celui-ci lorsque l'élément déformable est dans un état de repos dans lequel il n'est pas comprimé.

7. - Vanne selon l'une quelconque des revendications précédentes, comprenant un corps de vanne à section circulaire et dans laquelle l'obturateur a une section circulaire ayant un diamètre extérieur inférieur au diamètre intérieur du corps de vanne, lorsque l'élément déformable est à l'état de repos.

8. - Vanne selon l'une quelconque des revendications précédentes, dans laquelle l'élément déformable est fait d'un polymère synthétique, tel que du silicone, ou d'un caoutchouc synthétique, tel qu'un caoutchouc de type EPDM et analogue.

9. - Vanne selon l'une quelconque des revendications précédentes, dans laquelle les première et seconde parties d'extrémité sont combinées de manière amovible avec le corps de vanne, de préférence par vissage à l'aide de premiers moyens d'accouplement (13) respectifs qui sont appariés à des seconds moyens d'accouplement (14) correspondants obtenus au niveau du corps de vanne, les premier et seconde éléments fixes pouvant faire partie intégrante des première et seconde parties d'extrémité respectives, ou être des éléments séparés combinés avec celles-ci de manière fixe ou amovible.

10. - Vanne selon l'une quelconque des revendications précédentes, dans laquelle le corps de vanne a une surface intérieure presque continue, à l'exception des ouvertures correspondant aux orifices, et ne comporte pas d'éléments de butée périphériques émergeant de sa surface intérieure.

11. - Vanne selon l'une quelconque des revendications précédentes, comprenant un actionneur d'entraînement à commande manuelle ou automatique (16) pour déplacer la broche alternativement dans les première et seconde directions (D1, D2), et ledit actionneur d'entraînement étant un actionneur de type électrique.

12. - Vanne selon l'une quelconque des revendications précédentes, la vanne :
- a cinq orifices, et deux obturateurs sont combinés avec la broche pour dériver l'écoulement de fluide entre un orifice d'entrée et deux orifices de sortie différents, inversant ainsi le sens de passage de deux orifices intermédiaires.

13. - Procédé d'assemblage d'une vanne selon l'une quelconque des revendications précédentes, dans lequel sont prévues les étapes :
a) prédisposer le corps de vanne (2) ayant deux orifices (3) ou plus pour l'entrée et/ou la sortie du fluide ;
b) combiner la première ou la seconde partie d'extrémité (4, 5) avec le corps de vanne ;
c) combiner, respectivement, le premier ou le second élément fixe (11, 12) avec ladite première ou seconde partie d'extrémité ;
d) disposer la broche (6) à l'intérieur du corps de vanne de telle sorte qu'elle peut coulisser à l'intérieur dudit corps, ladite broche comportant une première ou une seconde partie de butée (6b, 6c) ;
e) combiner de manière coulissante au moins un obturateur (7) comportant un élément déformable (10) avec ladite broche ;
f) combiner la seconde ou la première partie de butée (6c, 6b) avec ladite broche ;
g) combiner, respectivement, le second ou le premier élément fixe (12, 11) avec la seconde ou première partie d'extrémité ;
h) combiner ladite première ou seconde partie d'extrémité (5, 4) avec le corps de vanne ; et
i) combiner un actionneur d'entraînement avec la broche pour la déplacer dans des directions opposées à l'intérieur du corps de vanne,
**caractérisé par le fait que** la vanne comprend au moins deux obturateurs et que l'étape e) prévoit l'interposition d'un élément d'espacement (6a) entre chaque couple d'obturateurs, de façon à maintenir chaque couple d'obturateurs adjacents à une distance prédéfinie l'un de l'autre.
